# EUROPEAN PATENT APPLICATION

(11) **EP 1 479 277 A1**
(43) Date of publication of application: **24.11.2004**
(21) Application number: 03253152.7
(22) Date of filing: 20.05.2003
(51) Int. Cl.: A01D 34/416

(54) **Weed eater adapter**

(71) Applicant: Sullivan, Donald Joe, Sandwich, IL 60548 (US)
(72) Inventor: Sullivan, Donald Joe, Sandwich, IL 60548 (US)
(74) Representative: Paget, Hugh Charles Edward

(57) **Abstract**

An adapter (3) for a weed eater is disclosed. The adapter is movably connected to a lower side of a spinning spool of a weed eater (1). The adapter (3) when installed to the weed eater (1) has a cord height equal to that of the weeds after cutting. A center of the seat of the adapter has a penetrating hole (31). A stud (4) penetrates through the penetrating hole (31) of the adapter (3) so as to lock to the spinning spool (2) of the weed eater (1). Since the diameter of the penetrating hole (31) is larger than the diameter of the stud (4), the adapter (3) and the spinning spool (2), are movably connected to one another, and the adapter (3) can move along the stud (4). The weight of the weed eater (1) can be transferred to the ground so as to reduce the burden of the user and the weed eater (1) can duck from stones as it is trimming weeds.

## Description

The present invention relates to adapters for weed eaters, trimmers and the like. Preferably the invention provides an adapter which may have a predetermined height and which may be pivotally installed to a lower side of a spinning spool of a weed eater.

U. S. Patent No. 5644844 discloses a prior art weed eater. The front end of the weed eater has an electromotive weed eating means. A handle is installed at a distal end and at the middle of the body of the weed eater. The handle at the distal end is installed with an operation switch for controlling the ON/OFF of the electromotive weed eating means. The weed eating means has a motor installed therein for driving a spinning spool at the bottom. The trimming cords of the spinning spool, rotating at a high speed, form a round trimming surface by the eccentric force thereof. In use, the weed eater is held with two hands or carried on the shoulder and the spinning spool dangles above meadow with a predetermined height. However, after a long period of operation, the eyes, hands, shoulders and neck of the operator will feel uneasy. Furthermore, the height of the trimmed weeds can not be well controlled. In the prior art, as the trimming rope is consumed, the user lifts the weed eater and then places it on the ground for flapping it and the weed eater is touched with the ground. Then an internal means for unwinding the cords is actuated to adjust the length of the exposed cords. Moreover, the effective trimming area of the weed eater is retained.

Accordingly, an aspect of the present invention provides an adapter of or for a weed eater, wherein the adapter is movably connected or connectable to a lower side of a spinning spool of a weed eater. Typically, the installed adapter sets the trimming cord or cords at a height equal to that of the weeds after trimming. Moreover, the weed eater can be placed on the meadow and moved along the ground. As it is driven by a motor, the cords will form a round trimming surface by the eccentric force of the high speed rotation from the spool. Therefore, the trimming cords may be dangled at a predetermined height for trimming the weeds. As a consequence, the muscles of eyes, hands, shoulders and neck of the operator may not feel uneasy in trimming weeds.

A preferred object of the present invention is to provide an adapter of or for a weed eater, wherein the adapter is installed to a lower end of a spinning spool at a bottom of a weed eater so that the assembly of the adapter needs no auxiliary tool. It is only necessary to slot the rectangular head of a stud into a rectangular hole of the adapter. Thereby, turning the adapter can cause the screw to be fixed to a rotary shaft of a weed eater.

Another preferred object of the present invention is to provide an adapter of or for a weed eater, wherein the adapter with a round seat has a bottom being a round plane. The diameter of the round plane may be larger than 3 inches. The periphery of the buckle thereof may have a proper cambered shape (through an arc radius larger than one quarter (¼) inches). Thereby, as the weed eater is moved, since the bottom of the adapter has a larger contact area with the ground, as the weed eater is operated, it may be retained vertically with the ground so that the trimmed weeds have the same height. The periphery of the cambered shape means that the adapter can be pushed into an uneven ground. When it contacts small stones, the adapter may rotate so as to duck the stones. No meadow is harmed.

A further preferred object of the present invention is to provide an adapter of or for a weed eater, wherein adapter has a platform at a center thereof. The diameter of the platform is smaller than one and five eighth (1⅝) inches, and the height thereof is preferably smaller than three sixteenth (³/₁₆) inches. When the adapter is fixed to the bottom of a weed eater, the platform helps in aligning the adapter to the concave recessed shape of the spool and makes it easier to align and couple the screw to the shaft of the weed eater. Also the gap between the contact surfaces of the adapter and the spool will be minimized so that undesired objects will not enter into the rotary shaft to affect the normal operation of the weed eater. Based on the same consideration, a plug can be used to seal the lower end of the penetrating hole of the adapter so as to retain the smoothness of the bottom of the adapter and thus no undesired object can intrude into the adapter.

A further preferred object of the present invention is to provide an adapter of or for a weed eater, wherein the rectangular hole or hole of other shapes has a depth so that a screw may move through three quarter (¾) inches along the rotary shaft. Especially, in trimming weeds, the user flaps the weed eater onto the ground. Thereby, the adapter and spool move upward so that the rope in the winding means can be released to adjust the length thereof. As a result, the consumption of the rope in cutting weeds can be compensated and the effective trimming area of the weed eater can be retained.

In another aspect, there is provided a combination of an adapter according to the above aspect and a weed eater, trimmer or the like.

The various preferred objects and advantages of the present invention will be more readily understood from the following detailed description of an embodiment of the invention when read in conjunction with the appended drawings in which:
Fig. 1 is a perspective view of an embodiment of the present invention.
Fig. 2 is a cross sectional view of an embodiment of the present invention.
Fig. 3 is an assembled exploded view of the weed eater of an embodiment of the present invention.

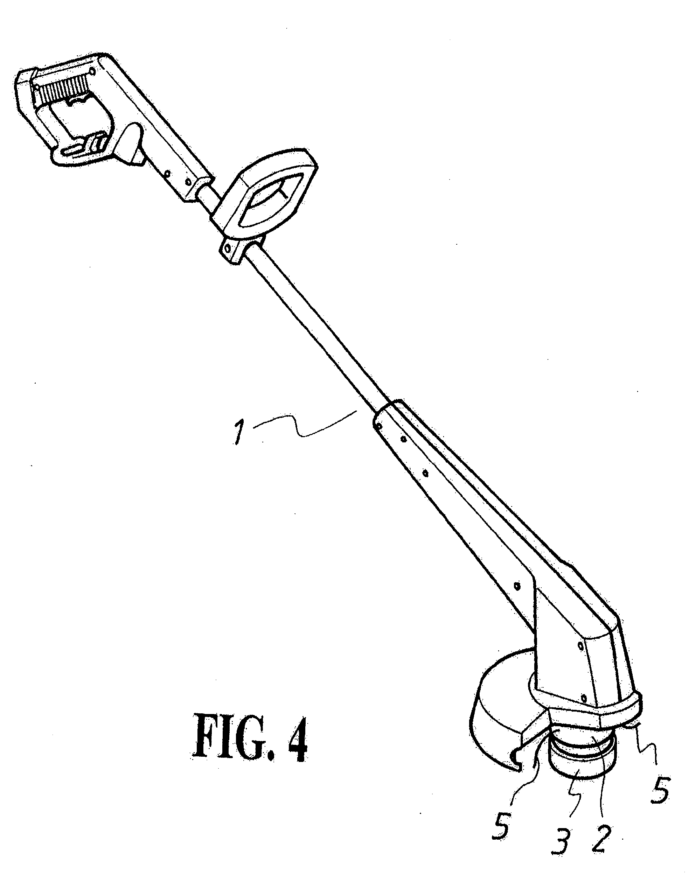

Fig. 4 is a perspective view of the weed eater of an embodiment of the present invention.
Fig. 5 is a schematic view showing the operation of an embodiment of the present invention.

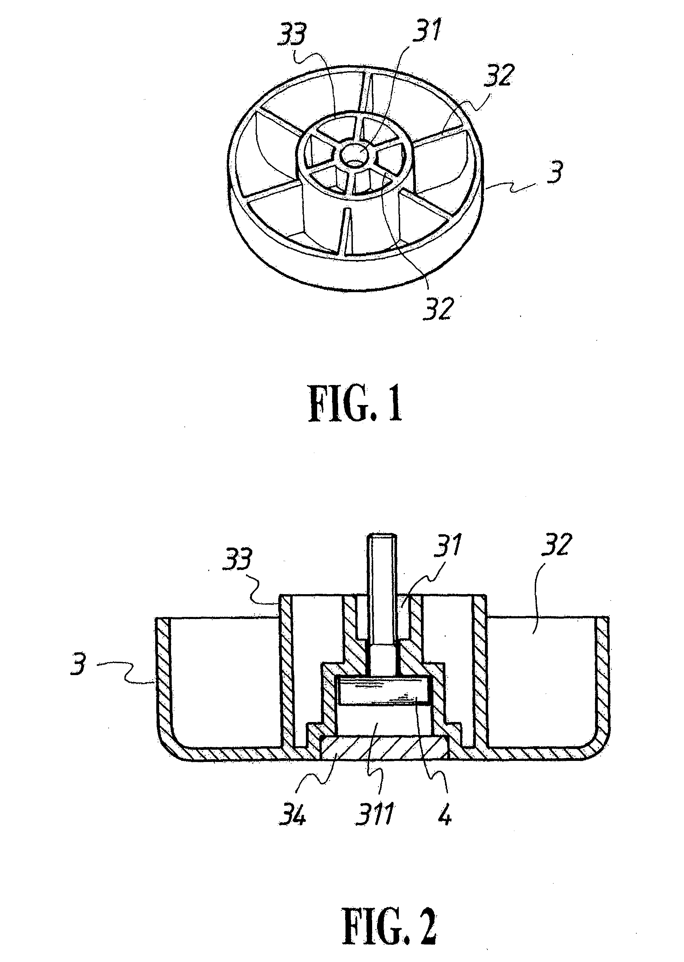

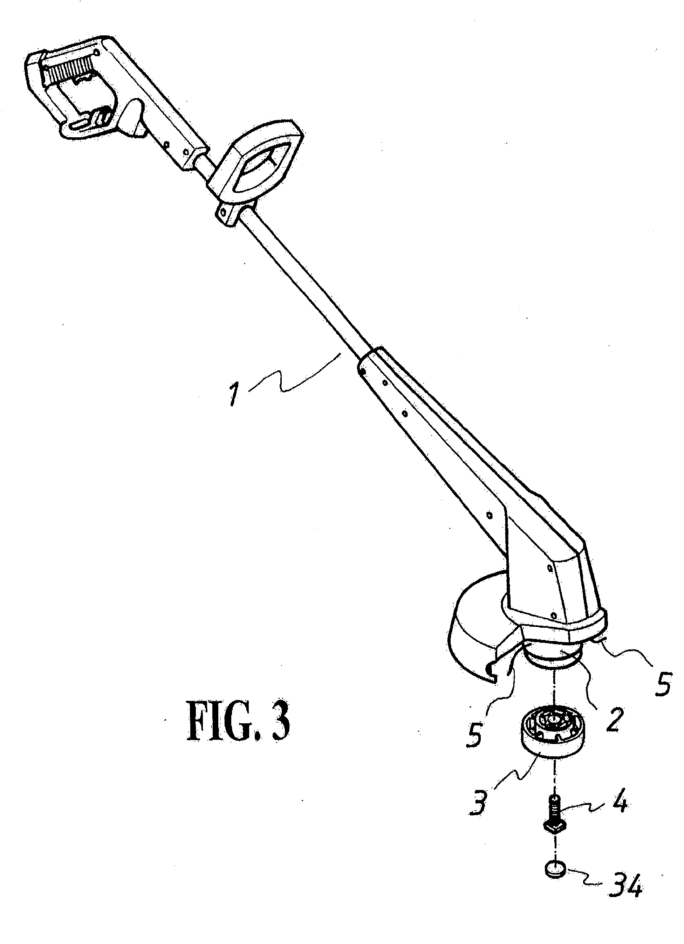

Referring to Figs. 1 to 3, the adapter of a weed eater of an embodiment of the present invention is illustrated. An adapter 3 is movably connected to a lower side of a spinning spool of a weed eater 1. The adapter 3 has a height which when installed to the weed eater sets the cords height equally to the weeds after trimmed. In general, the trimmed meadow height is about two and a quarter (2.25) inches to two and a half (2.5) inches. A penetrating hole 31 is formed at a center of the seat. The seat may be a solid seat or a hollow seat (not shown) and may be made of any suitable material. If the seat is a hollow body, an enhancing rib 32 can be installed in the seat. The enhancing rib 32 may be formed by a plurality of windings or have a radiating shape for enhancing the structure thereof.

In above mentioned adapter 3, a stud 4 penetrates through the penetrating hole 31 of the adapter 3 so as to lock to the spinning spool 2 of the weed eater 1 (referring to Fig. 2). Since the diameter of the penetrating hole 31 is larger than the diameter of the stud, as the weeds eater flaps onto the ground, the adapter 3 and the spinning spool 2 can be pushed upwards integrally, while the stud 4 can be slid down along an axis so that a winding rope can be released.

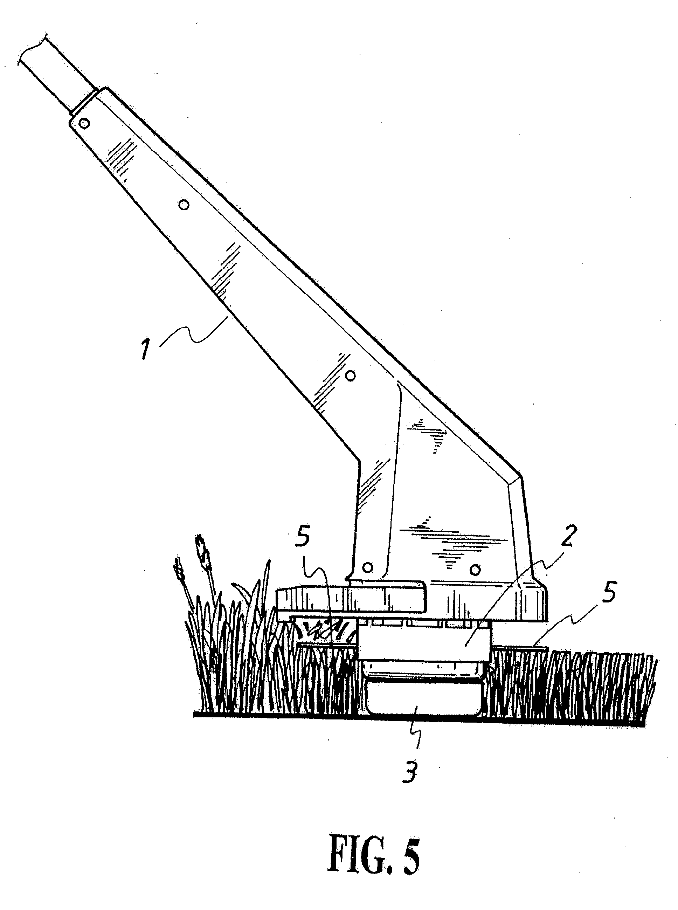

The adapter 3 is pivotally installed to a lower side of the spinning spool 2. Thus the weed eater 1 can be placed on a meadow and moves along the meadow so that the user may operate it easily. Moreover, when the adapter is installed to the weed eater, the height of the adapter 3 will set the cord height which is the height of the trimmed meadow. As it is driven by a motor, the rope will form a round trimmed surface by the eccentric force from the high speed rotation of the spool. Therefore, the adapter 3 can be dangled along the meadow for trimming the weeds (referring to Fig. 5).

The adapter 3 can be a round seat and is connected to the weed eater 1. If the adapter 3 touches small stones as it cuts weeds in movement, it can duck the stones by automatically rotating. Therefore, the operation is successful. No meadow is damaged and moreover, the trimmed weeds have the same height.

The stud 4 has a head of rectangular shape or specific shape. The penetrating hole 31 of the adapter 3 is corresponding to a rectangular hole 311 or a groove of a specific shape (referring to Fig. 2). There, the stud 4 with a rectangular head may be embedded into the rectangular hole 311 of the adapter 3. As a result, the adapter 3 can be easily and conveniently fixed to the rotary shaft of the weed eater 1. No tool is necessary in assembly.

The adapter 3 with a round seat of the embodiment of the present invention has a bottom being a round plane. The diameter of the round plane has a diameter larger than 3 inches. The periphery of the buckle thereof has a proper cambered shape (through an arc radius larger than one quarter (¼) inches). Thereby, as the weed eater 1 is moved, since the bottom of the adapter 3 has a larger contact area with the ground, as the weed eater 1 is operated, it may be retained vertically with the ground so that the trimmed weeds have the same height. The periphery of the cambered shape cause the adapter 3 can be pushed into an uneven ground. When it contacts small stones, the adapter 3 may rotate so as to duck the stones. No meadow is harmed. Above mentioned adapter 3 has a platform 33 at a center thereof. The diameter of the platform 33 is smaller than one and five eighth (1⅝) inches, and the height thereof is preferably smaller then three sixteenth (³/₁₆) inches. When the adapter 3 is fixed to a bottom of a weed eater 1, the platform 33 helps aligning the adapter 3 to the concave recessed shape of the spool 2 and makes it easier to align and couple the screw 4 to the shaft of the weed eater 1. Also the gap between the contact surfaces of the adapter and the spool will be minimized so that undesired objects will not enter into the rotary shaft to affect the normal operation of the weed eater 1. Based on the same consideration, a plug 34 can be used to seal the lower end of the penetrating hole 31 of the adapter 3 so as to retain the smoothness of the bottom of the adapter 3 and thus no undesired object can intrude into the adapter 3. The rectangular hole 311 or hole of other shapes has a depth so that a screw may move through three quarter (¾) inches along the rotary shaft. Especially, in trimming weeds, the user flaps the weed eater 1 slightly onto the ground. Thereby, the adapter 3 and the spool 2 presses upwards along the shaft of the weed eater 1. Then the cord release mechanism is actuated and the cords 5 in the winding means can be released to adjust the length thereof. As a result, the consumption of the cords 5 in trimming weeds can be compensated and the effective trimming area of the weed eater 1 can be retained.

An embodiment of the present invention is thus described. In the light of the foregoing it will be clear that the same may be varied in many ways. Such variations are not to be regarded as a departure from the spirit and scope of the present invention, and all such modifications as would be obvious to one skilled in the art are intended to be included within the scope of the invention.

## Claims

1. An adapter for a weed eater, wherein: the adapter is movably connectable to a lower side of a spinning spool of a weed eater; the adapter has a height which, when the adapter is installed, sets the cord height equal to that of the weeds after being trimmed; the center of a seat of the adapter has a penetrating hole; a stud is capable of penetrating through the penetrating hole of the adapter so as to lock to the spinning spool of the weed eater; the diameter of the penetrating hole is larger than the diameter of the stud, thereby allowing the adapter and the spinning spool to be movably connected to one another, and the adapter can move along the stud.

2. The adapter of a weed eater as claimed in claim 1, wherein the height of the adapter when installed to the weed eater, sets the cords at a predetermined height of is preferably between two and a quarter (2.25) to two and a half (2.5) inches.

3. The adapter of a weed eater as claimed in claim 1, wherein the seat of the adapter is a solid body or a hollow body.

4. The adapter of a weed eater as claimed in claim 1, wherein an enhancing rib is installed in the seat and the enhancing rib is formed by a plurality of windings or has a radiating shape for enhancing the structure thereof.

5. The adapter of a weed eater as claimed in claim 1, wherein the adapter is a round seat.

6. The adapter of a weed eater as claimed in claim 1, wherein the stud has a head of rectangular shape or specific shape; the penetrating hole of the adapter is corresponding to a rectangular hole or a groove of a specific shape; therefore, the stud with a rectangular head is embedded into the rectangular hole.

7. The adapter of a weed eater as claimed in claim 1, wherein a diameter of the round plane has a diameter larger than 3 inches; a periphery of the buckle thereof has a proper cambered shape at an arc radius of larger than one quarter (¼) inches.

8. The adapter of a weed eater as claimed in claim 1, wherein a center of the adapter has a platform.

9. The adapter of a weed eater as claimed in claim 1, wherein a diameter is preferably smaller than one and five-eighth (1⅝) inches and a height thereof is smaller than three sixteenth (³/₁₆) inches.

10. The adapter of a weed eater as claimed in claim 1, wherein a plug is used to seal the lower end of the penetrating hole of the adapter so as to retain the smoothness of the bottom of the adapter and thus no undesired object can intrude into the adapter.

11. The adapter of a weed eater as claimed in claim 1, where a depth of the penetrating hole of the adapter provides that a screw can move along a rotary shaft.
